# EUROPEAN PATENT APPLICATION

(11) **EP 3 608 881 A1**
(43) Date of publication of application: **12.02.2020**
(21) Application number: 18197732.3
(22) Date of filing: 28.09.2018
(51) Int. Cl.: G06T 19/00, G06T 7/00

(54) **A SYSTEM AND METHOD TO AUTOMATICALLY GENERATE VALUABLE CUTTING PLANS FOR A ROUGH GEMSTONE**

(30) Priority: 11.08.2018 IN 201821030252
(71) Applicant: ALP Multitech Pvt. Ltd., 380 054 Ahmedabad, Gujarat (IN)
(72) Inventor: PATEL, Arvindbhai Lavjibhai, 380054 Gujarat (IN)
(74) Representative: Moore, Michael Richard

(57) **Abstract**

A system and method to automatically generate valuable cutting plans for a rough gemstone (10) is disclosed. An apparatus (150) having a gemstone holding fixture (30) holds the rough gemstone (10) to be evaluated. Camera (20) captures multiple external images of the rough gemstone (10) being rotated and illuminated. A three-dimensional external image of the rough gemstone (10) including external imperfections is generated using a software governed image processing device (70). After immersing the gemstone inside a medium (20) that has a refractive index substantially same as that of the gemstone (20), camera (50) captures multiple internal images of the rough gemstone (10) being rotated and illuminated. Three-dimensional images of impurities inside the rough gemstone (10) are generated and combined with the three-dimensional external image of the rough gemstone (10). Correct locations, shapes, and sizes of the internal impurities and external imperfections of the rough gemstone (10) are identified. Software governed image analysing device (140) computes three-dimensional cutting plans and selects the most valuable cutting plan while evaluating the worth of the rough gemstone (10) using real-time artisan data.

## Description

### FIELD OF THE INVENTION

The present invention relates to systems and methods to generate cutting plans for a rough gemstone. More particularly, it relates to systems and methods that identify internal impurities and external imperfections of rough gemstones and automatically select from a plurality of possible cutting plans the most valuable cutting plan.

### BACKGROUND OF THE INVENTION

Systems and methods to evaluate gemstones to calculate their worth have been known over the past several years. Gemstones being precious need to be evaluated meticulously or else small impurities like cracks, bubbles, or stresses in the gemstone may reduce its worth and may even render the gemstone useless. Due to deficiencies like external imperfections, cracks, or internal impurities, the worth of a gemstone will be significantly reduced. A gemstone needs to be analysed thoroughly in its initial form i.e. when the gemstone is a rough unpolished stone; it needs to be checked for the said deficiencies prior to cutting of the gemstone. Several systems and methods to evaluate a gemstone are available in prior arts.

US Patent Application No. 20100250201A1 discloses a method and system for optical grading of gemstones wherein a virtual three-dimensional (3D) model of an exterior surface of the gemstone is constructed. A plurality of visible inclusions inside the gemstone are identified utilizing ray tracing method and located on the 3D model within the interior volume of the gemstone and based on that the relevant optical characteristics of the inclusion are determined. After generation of the virtual image, subsequent computer analysis is carried out to provide a user with information relating to a visual characteristic of the gemstone depending on the light return, contrast, brilliance etc. However, the ray tracing technique is a complex method and the inclusions are visible only at specified viewing position under specified lighting conditions. The invention of the said Patent is semiautomatic type and requires human interactions.

US Patent Application No. 20170021530A1 discloses gemstone processing system and method wherein a gemstone processing system includes a visualization system for capturing stresses in a rough gemstone. The visualization system can include an image capturing device, a gemstone stage being rotatable with respect to the image capturing device, and one or more light sources to illuminate the rough gemstone on the gemstone stage. However, the said invention does not discuss visualization of the internal structure of the gemstone, nor there is any visualization of the stresses and inclusions of the gemstone in two or three dimensions. The said method needs skilled personnel to evaluate the worth of the gemstone rather than the system itself automatically determining the worth.

Thus, there exists a need to have a system and a method that identifies internal impurities and external imperfections of rough gemstones and automatically selects from a plurality of possible cutting plans the most valuable cutting plan. Such most valuable cutting plan can be directly fed to a gemstone cutting machine.

### STATEMENT OF THE INVENTION

The present invention discloses a system and method to identify internal impurities and external imperfections of rough gemstones and automatically select from a plurality of possible cutting plans the most valuable cutting plan.The system and method in accordance with the present invention uses multiple image capturing devices that capture internal as well as external images of the gemstone to be evaluated. The system in accordance with the present invention includes an image processing device and an image analysing device, both being governed by proprietary software. The apparatus includes a rotatable and vertically movable gemstone holding fixture. The gemstone holding fixture is connected to a rotatable shaft in such a manner that when the rotatable shaft rotates, the gemstone holding fixture also rotates being integrally connected to the rotatable shaft. The rotatable shaft is part of rotating mechanism which causes rotation of the rotatable shaft. The rotating mechanism is part of a moving mechanism such that the rotating mechanism can be vertically moved up or down and thus, the gemstone holding fixture can be moved up or down. Thus, a gemstone held in the gemstone holding fixture can be moved vertically up or down and can be rotated about the axis of the gemstone holding fixture.

A first source of light is provided to illuminate the gemstone being held by the gemstone holding fixture. A first camera is positioned to capture multiple external images of the gemstone illuminated by the first light. Multiple external images including external imperfections are captured using the first camera while the gemstone holding fixture is being rotated by the rotating mechanism. The multiple external images of the gemstone so captured are stored inside the software governed image processing device and using that a three-dimensional external image including external imperfections, if any, of the gemstone is generated.

A chamber is provided that has transparent walls. The transparent chamber is filled with a medium that is kept at a temperature at which refractive index of the medium is substantially same as the refractive index of the gemstone to be evaluated. In other words, the refractive index of the medium neutralizes the refractive index of the gemstone. The medium and the temperature at which it is to be kept will depend on the gemstone to be evaluated. A person skilled in the art will select appropriate medium and keep it at an appropriate temperature. For example, in case the gemstone is a diamond, the most appropriate medium would be Selenium to be kept in a liquid state at a temperature when its refractive index is substantially same as that of the diamond.

It is not uncommon to find gemstones with inherent impurities. These impurities have to be identified with precision for optimizing utilization of the gemstone. Using the moving mechanism, the gemstone held by the gemstone holding fixture is lowered down such that the gemstone is completely submerged inside the medium. A second source of light illuminates the gemstone inside the medium. Transparent walls of the transparent chamber are of non-reflective type. The refractive index of the medium being substantially same as that of gemstone, the light from the second source of light will not bend while entering the gemstone as would be the case if the refractive indices of the gemstone and the medium were to be different. In this manner, multiple internal images of the gemstone can be captured and also precise location of impurities, if any, inside the gemstone can be identified. A second camera captures multiple internal images of the gemstone including the impurities inside, if any, of gemstone while it is being rotated by the rotating mechanism and illuminated by the second light. These images multiple internal images of the gemstone including the impurities inside, if any, are stored inside the software governed image processing device and using that three-dimensional images of impurities, if any, are generated.

The software governed image processing device combines the generated three-dimensional external image of the gemstone with the generated three-dimensional images of internal impurities, if any. The software governed image processing device then identifies correct locations, shapes, and sizes of internal impurities, if any, and external imperfections, if any.

The combined generated three-dimensional external image of the gemstone with the generated three-dimensional images of internal impurities, if any, is accessed by the software governed image analysing device using WiFi or a Cloud system.

The software governed image analysing device that fetches in real-time artisan data of gemstones computes three-dimensional plans to cut the gemstone and selects the most valuable cutting plan therefrom. Selection of the most valuable cutting plan depends on the correct locations, shapes, and sizes of internal impurities, if any, and external imperfections, if any. Characteristics of the gemstone, such as cut, clarity, colour, and carat are considered. The Operator is given an opportunity to approve the automatically selected most valuable cutting plan or to manually choose a cutting plan.

### BRIEF DESCRIPTION OF DRAWINGS

Fig. 1 shows the system in accordance with the present invention.
Fig. 2 shows the flow chart of the method in accordance with the present invention.

### DETAILED DESCRIPTION OF THE INVENTION

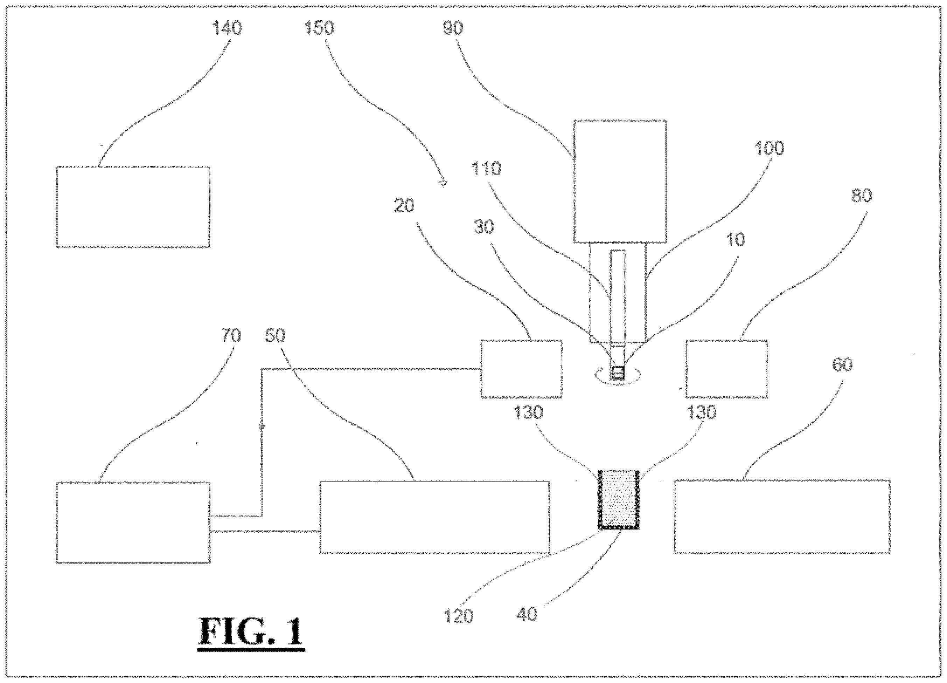

As shown in Fig. 1, the system in accordance with the present invention includes an apparatus (150) and an image analysing device (140). The apparatus (150) further includes a gemstone holding fixture (30) to hold rough gemstone (10). The gemstone holding fixture (30) is connected to a rotatable shaft (110) such that when the rotatable shaft (110) rotates, the gemstone holding fixture (30) also rotates being integrally connected to the rotatable shaft (110). The rotatable shaft (110) is part of rotating mechanism (100) which causes rotation of the rotatable shaft (110). The rotating mechanism (100) is part of a moving mechanism (90) such that the rotating mechanism (100) can be vertically moved up or down.

Thus, rough gemstone (10), being the gemstone to be automatically evaluated, when held in the gemstone holding fixture (30), can be moved vertically up or down and can be rotated about the axis of the gemstone holding fixture (30).

A first source of light (80) is provided to illuminate the rough gemstone (10) being held by the gemstone holding fixture (30). A first camera (20) is positioned to capture multiple external images of the rough gemstone (10) while the gemstone holding fixture (30) is being rotated by the rotating mechanism (100) and the rough gemstone (10) is illuminated by the first source of light (80). The multiple external images including the external imperfections, if any, of the rough gemstone (10) so captured are stored inside the software governed image processing device (70) using which a three-dimensional external image including external imperfections, if any, of the rough gemstone (10) is generated.

A transparent chamber (40) is provided that has transparent walls (130). The transparent chamber (40) is filled with a medium (120) that is kept at an appropriate temperature at which refractive index of the medium (120) is substantially same as the refractive index of the rough gemstone (10). In other words, the refractive index of the medium (120) neutralizes the refractive index of the rough gemstone (10). The medium (120) and the temperature at which it is to be kept will depend on the rough gemstone (10) to be evaluated. A person skilled in the art will select appropriate medium and keep it at an appropriate temperature. For example, in case the rough gemstone (10) is a diamond, the most appropriate medium (120) would be Selenium to be kept in a liquid state at a temperature when its refractive index is substantially same as that of the diamond.

It is not uncommon to find gemstones with inherent impurities. These impurities have to be identified with precision for optimized utilization of the gemstone. Using the moving mechanism (90), the rough gemstone (10) held by the gemstone holding fixture (30) is lowered down inside the transparent chamber (40) such that the rough gemstone (10) is completely submerged inside the medium (120). A second source of light (60) illuminates the rough gemstone (10) inside the medium (120). Transparent walls (130) of the transparent chamber (40) are of non-reflective type. The refractive index of the medium (120) being substantially same as that of rough gemstone (10), the light from the second source of light (60) will not bend while entering the rough gemstone (10) as would be the case if the refractive indices of the rough gemstone (10) and the medium (120) were to be different. In this manner, multiple internal images of the rough gemstone (10) can be captured and also precise location of impurities, if any, inside the rough gemstone (10) can be identified. A second camera (50) captures multiple internal images of the rough gemstone (10) including the impurities inside, if any, of rough gemstone (10) while it is being rotated by the rotating mechanism (90) and illuminated by the second source of light (60). These images multiple internal images of the rough gemstone (10) including the impurities inside, if any, are stored inside the software governed image processing device (70) and using that three-dimensional images of impurities, if any, are generated.

The software governed image processing device (70) combines the generated three-dimensional external image of the rough gemstone (10) with the generated three-dimensional images of internal impurities, if any. The software governed image processing device (70) then identifies correct locations, shapes, and sizes of internal impurities, if any, and external imperfections, if any.

The combined generated three-dimensional external image of the rough gemstone (10) with the generated three-dimensional images of internal impurities, if any, is accessed by the software governed image analysing device (140) using WiFi or a Cloud system. The software governed image analysing device (140) is connected to the World Wide Web using Internet connection and has real-time artisan data for different gemstones.

The software governed image analysing device (140) computes three-dimensional plans to cut the rough gemstone (10) and automatically selects the most valuable cutting plan therefrom. Selection of the most valuable cutting plan depends on the correct locations, shapes, and sizes of internal impurities, if any, and external imperfections, if any, and characteristics of the rough gemstone (10), such as cut, clarity, colour, and carat are considered. In other words, for every cutting plan and characteristics of cut, clarity, colour, and carat of the rough gemstone (10), the software governed image analysing device (140) can fetch using real-time data, the worth of the gemstone and display in terms of the chosen currency the worth of the rough gemstone (10). The Operator is given an opportunity to approve the selected cutting plan or to manually choose a cutting plan. Thus, though the system in accordance with the present invention is automatic, the Operator has an opportunity of selecting the cutting plan manually.

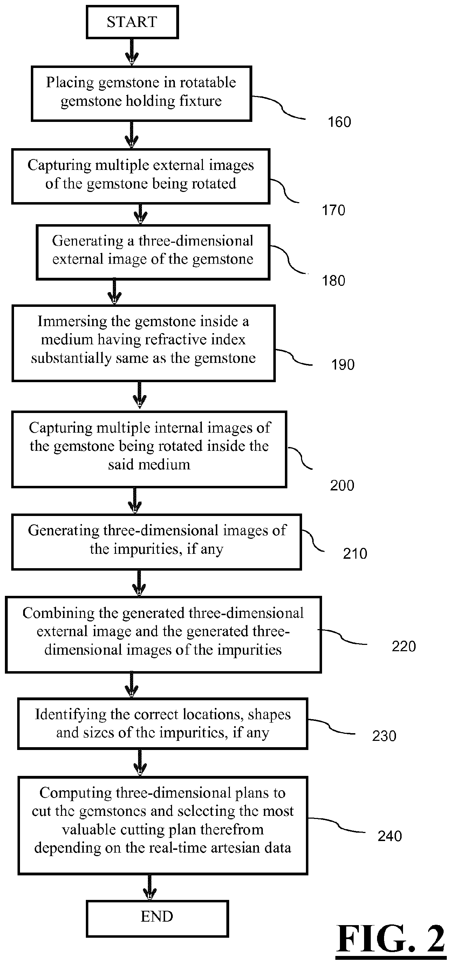

The steps from step (160) of placing the rough gemstone (10) in the rotatable gemstone holding fixture (30) to step (240) of computing three-dimensional plans to cut the rough gemstone (10) and selecting the most valuable cutting plan therefrom depending on the real-time artisan data are shown in Fig. 2 which is a flow chart of the steps of the method for automatically selecting most valuable cutting plan of a rough gemstone (10).

As shown in Fig. 2, step (160) is to place the rough gemstone (10) inside the rotatable gemstone holding fixture (30). This is followed by step (170) wherein multiple external images of the rough gemstone (10) are captured using the first camera (20). This happens while the rough gemstone (10) is being rotated by the rotating mechanism (100) as explained hereinabove. The software governed image processing device (70) in step (180) generates a three-dimensional image of the rough gemstone (10) including external imperfections, if any, of the rough gemstone (10). The next step (190) is to lower down and immerse the rough gemstone (10) inside transparent chamber (40) wherein medium (120) is kept at a temperature at which the refractive index of the medium (120) is substantially same as the refractive index of the rough gemstone (10). In the next step (200), using the second camera (50), multiple internal images of the rough gemstone (10) are captured while the rough gemstone (10) is being rotated and illuminated by the second source of light (60). In step (210), three-dimensional images of the internal impurities, if any, of the rough gemstone (10) are generated using the software governed image processing device (70). The next step is to combine the generated three-dimensional external image of the rough gemstone (10) with the generated three-dimensional images of the internal impurities, if any, of the rough gemstone (10). This happens in step (220). The software governed image processing device (70) then identifies the correct locations, shapes, and sizes of the internal impurities, if any, and external imperfections, if any. This happens in step (230). The software governed image analysing device (140) is connected to the World Wide Web using Internet and has real-time artisan data. Depending on the characteristics of the rough gemstone (10) and the correct locations, shapes, and sizes of the internal impurities, if any, and external imperfections, if any, of the rough gemstone (10), real-time evaluation of the rough gemstone (10) is done by the software governed image analysing device (140) for the different plans to cut the rough gemstone (10) as well as for the most valuable cutting plan to cut the rough gemstone (10). This happens in step (240). For a selected currency, the evaluation in terms of that currency can be displayed.

A person skilled in the art will readily understand that the system and method disclosed is not limited to a rough gemstone, it can also be used in the case of a finished gemstone to figure out in real-time its worth considering the locations, shapes, and sizes of the internal impurities and external imperfections, if any and the characteristics such as cut, clarity, colour, and carat.

Further preferred features and advantages of the present invention will be apparent to those skilled in the art from the following description of the best method of performing the invention which should not be considered to be limiting the scope of the invention as defined in any of the preceding statements, or in the claims appended hereto.

### Best Method of performing the Invention

The detailed description of the present invention describes in detail the invention, however, the present invention can best be used for a rough diamond that is to be evaluated for its worth and to select the most valuable cutting plan for the said diamond.

Thus, the best method of performing the invention will be to use a rough diamond as rough gemstone (10) and use Selenium as medium (120). Selenium will have to be kept at a temperature at which its refractive index is substantially same as that of the diamond. This will have a refractive index neutralizing effect due to which light entering the diamond through Selenium kept at the appropriate temperature will not bend allowing capturing of precise internal images and locations of the internal impurities, if any.

In the best method of performing the invention, the software of the software governed image analysing device (140) is based on artificial neural network.

In the best method of performing the invention, the software governed image analysing device (140) is connected to the World Wide Web using Internet and the information regarding the correct locations, shape, and sizes of the internal impurities and external imperfections of the rough gemstone (10) resides on Cloud and is accessed by the software governed image analysing device (140).

In the best method of performing the invention, the Operator will be offered an option to manually select a cutting plan of the rough gemstone (10) on the basis of the correct locations, shape, and sizes of the internal impurities and external imperfections of the rough gemstone (10).

The detailed description hereinabove illustrates the principle of the inventive idea of the present invention. Various modifications without departing from the spirit and scope of the present invention will be apparent to a person skilled in the art. The disclosure hereinabove ought not to be construed to limit the scope of the present invention. The present invention should not be considered to be limited to what has been discussed and disclosed hereinabove.

## Claims

1. A system to automatically generate valuable cutting plans for a rough gemstone (10) comprising
a. an apparatus (150) further comprising
i. a first source of light (80);
ii. a first camera (20);
iii. a movable and rotatable gemstone holding fixture (30);
iv. a rectangular chamber (40) having transparent walls (130) and containing a medium (120) having a refractive index that substantially neutralizes the refractive index of the rough gemstone (10) to be evaluated;
v. a second source of light (60);
vi. a second camera (50);
vii. a software governed image processing device (70); and
b. a software governed image analysing device (140).

2. The software governed image analysing device (140) of Claim 1, wherein the software is based on artificial neural network and has real-time gemstone artisan data.

3. A method to automatically generate valuable cutting plans for a rough gemstone (10) comprising the steps of
a. having a rough gemstone (10);
b. having an apparatus (150) equipped with
i. a first source of light (80);
ii. a first camera (20);
iii. a movable and rotatable gemstone holding fixture (30);
iv. a rectangular chamber (40) having transparent walls (130) and containing a medium (120) having a refractive index that substantially neutralizes the refractive index of the rough gemstone (10) to be evaluated;
v. a second source of light (60);
vi. a second camera (50);
vii. a software governed image processing device (70);
c. having a software governed image analysing device (140);
d. placing the rough gemstone (10) in the said rotatable gemstone holding fixture (30);
e. capturing using the said first camera (20) using illumination by the first source of light (80) multiple external images of the rough gemstone (10) while the rough gemstone (10) is being rotated and storing the said multiple external images in the said software governed image processing device (70);
f. generating utilizing the said software governed image processing device (70) a three-dimensional external image of the rough gemstone (10) using the said stored multiple external images of the rough gemstone (10);
g. immersing the rough gemstone (10) inside the said medium (120);
h. capturing using the said second camera (50) using the second source of light (60) multiple internal images of the rough gemstone (10) while the rough gemstone (10) is being rotated and storing the said multiple internal images in the said software governed image processing device (70);
i. generating utilizing the said software governed image processing device (70) three-dimensional images of impurities, if any, inside the rough gemstone (10) using the said stored multiple internal images of the rough gemstone (10);
j. combining using the software governed image processing device (70) the generated three-dimensional external image of the rough gemstone (10) with the generated three-dimensional images of internal impurities of the rough gemstone (10) if any;
k. identifying using the said software governed image processing device (70) correct locations, shapes and sizes of the internal impurities and external imperfections of the rough gemstone (10), if any;
l. computing using the said software governed image analysing device (140) three-dimensional cutting plans and selecting the most valuable cutting plan therefrom to cut the rough gemstone (10) depending on the characteristics of the rough gemstone (10) analysed by the said software governed image analysing device (140) considering the correct locations, shapes and sizes of the internal impurities and external imperfections of the rough gemstone (10), if any, as identified by the software governed image processing device (70) while giving the Operator an option to manually choose a cutting plan different from the automatically selected most valuable cutting plan.

4. The software governed image analysing device (140) of Claim 3, wherein the software is based on artificial neural network and has real-time gemstone artisan data.
